# EUROPÄISCHE PATENTSCHRIFT

(11) **EP 2 222 524 B1**
(45) Veröffentlichungstag und Bekanntmachung des Hinweises auf die Patenterteilung: **05.03.2014**
(21) Anmeldenummer: 08852797.3
(22) Anmeldetag: 05.11.2008
(51) Int. Cl.: B60T 8/36, F16K 31/06, G05D 16/20

(54) **DRUCKREGELVENTIL**
PRESSURE REGULATING VALVE
SOUPAPE DE RÉGLAGE DE PRESSION

(30) Priorität: 19.11.2007 DE 102007055126; 27.08.2008 DE 102008039959
(43) Veröffentlichungstag der Anmeldung: 01.09.2010
(73) Patentinhaber: Continental Teves AG & Co. OHG, 60488 Frankfurt (DE)
(72) Erfinder: COURTH, Christian, 60439 Frankfurt am Main (DE); VOSS, Christoph, 60435 Frankfurt am Main (DE); BILLER, Harald, 65760 Eschborn (DE); BOHN, Joachim, 56414 Hundsangen (DE); KOLLMANN, Holger, 63533 Mainhausen (DE); GARCIA-QUILON, José, 63674 Altenstadt/Oberau (DE)
(86) Internationale Anmeldenummer: PCT/EP2008/064964
(87) Internationale Veröffentlichungsnummer: WO 2009/065735

(56) Entgegenhaltungen:
- EP-A- 0 485 737
- EP-A- 0 822 362
- DE-A1- 10 154 257
- US-A1- 2004 262 557
- US-A1- 2005 035 320

## Beschreibung

Die Erfindung betrifft ein stromlos offenes, analog regelbares Ventil, im nachfolgenden Druckregelventil genannt, insbesondere zur Drucksteuerung in Kraftfahrzeugbremsanlagen, nach dem Oberbegriff des Patentanspruchs 1.

Aus DE 101 54 257 A1 ist ein Druckregelventil bekannt, das als analog betätigbares Radeinlass- oder auch als Trennventil in Kraftfahrzeugbremsanlagen zum Einsatz gelangt, wozu:
a) unter Verwendung präziser Bauelemente, insbesondere einer eng spezifizierten Druckfeder, das Druckregelventil auf größtmögliche Präzision ausgelegt werden muss, bzw.
b) das Druckregelventil in der Produktion auf definierte Funktionswerte eingestellt werden muss, wobei eine Vergrößerung bzw. Verkleinerung des Arbeitsluftspalts im Elektromagneten als Stellgröße benutzt wird.

In beiden Fällen ist die Genauigkeit der erreichbaren Spezifikation begrenzt, weil im Fall a) die Herstellbarkeit genauerer Komponenten nicht wirtschaftlich gegeben ist, während im Fall b) durch die Variation des Luftspalts die Lage und Toleranz der Öffnungstromkennlinie nur für einen Druck, den Einstelldruck, optimal gestaltet werden kann, wobei sich für Drücke entfernt vom Einstellpunkt je nach Höhe der auszugleichenden Fehler größere Abweichungen einstellen.

Aus EP 0 822 362 A2 ist bereits ein Druckregelventil der angegebenen Art bekannt, mit einer in einem Ventilgehäuse fixierten, als Regelfeder ausgebildeten Druckfeder zur Positionierung eines mit einem Magnetanker verbundenen Ventilstößels, sowie mit einer weiteren Druckfeder im Ventilgehäuse, die als entgegengesetzt zur Regelfeder wirksamen Einstellfeder ausgebildet ist, die mittels einer in das Ventilgehäuse eingesetzten Stellschraube variabel justierbar ist.

Daher ist es die Aufgabe der Erfindung, ein Druckregelventil der angegebenen Art derart zu verbessern, dass eine präzise Justierung der Einstellfeder mit möglichst einfachen Mitteln möglich ist.

Diese Aufgabe wird erfindungsgemäß für ein Druckregelventil der angegebenen Art durch die kennzeichnenden Merkmale des Patentanspruchs 1 gelöst.

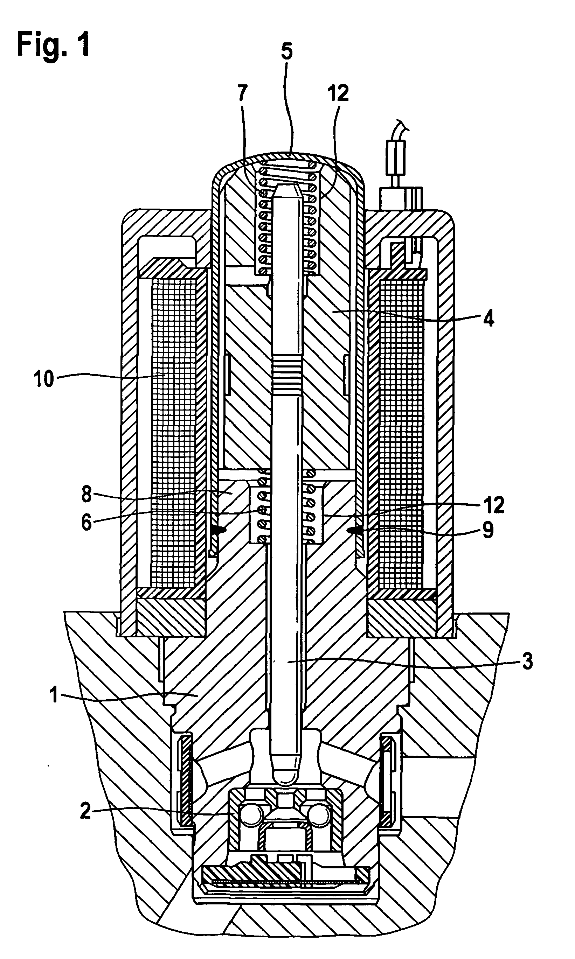

Weitere Ausführungen, Merkmale und Vorteile der Erfindung gehen nachfolgend aus der Beschreibung mehrerer Zeichnungen gemäß den Figuren 1 bis 3 hervor.

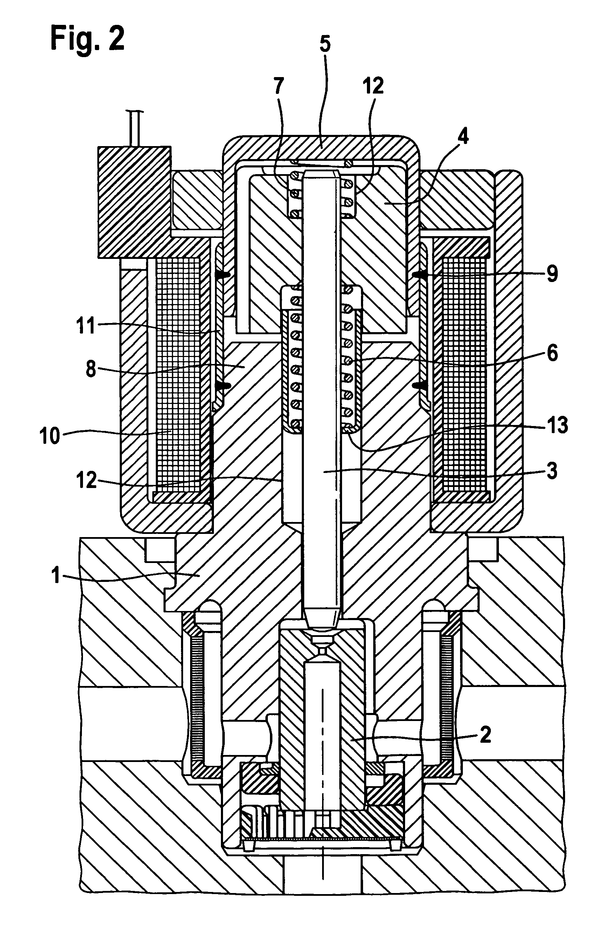

Die Figuren 1, 2 zeigen jeweils im Längsschnitt ein Druckregelventil, mit einer in einem Ventilgehäuse 1 fixierten Druckfeder zur Positionierung eines mit einem Magnetanker 4 verbundenen Ventilstößels 3 in der elektromagnetisch nicht erregten, von einem Ventilsitz 2 abgehobenen Stellung, um eine analog regelbare Verbindung zwischen wenigstens zwei in das Ventilgehäuse 1 einmündenden Druckmittelkanälen herzustellen.

Baulich befindet sich der Ventilsitz 2 als Bestandteil einer Ventilplatte fest eingepresst im patronenförmigen Ventilgehäuse 1, der mit dem Ventilstößel 3 einen regelbaren Durchlassquerschnitt bildet. Hingegen ist der Ventilstößel 3 in allen Ausführungsbeispielen mit dem Magnetanker 4 form- oder kraftschlüssig verbunden.

Die Druckfeder ist infolge der Analogventilfunktion als eine Regelfeder 6 ausgebildet, deren Federrate in Abstimmung mit der Federrate einer Einstellfeder 7 und dem Kraft-/Hubverlauf eines Elektromagneten einen durch Stromvariation in einer Erregerspule 10 hub- und kraftspezifischen Federantrieb bildet. Die Einstellfeder 7 ist als eine entgegengesetzt zur Regelfeder 6 wirkende, einfach justierbare Druckfeder ausgeführt.

Die Regelfeder 6 ist zwischen dem Magnetanker 4 und einem Magnetpolabschnitt 8 des Ventilgehäuses 1 angeordnet, wobei der Magnetpolabschnitt 8 eine Tasche 12 aufweist, in der die koaxial vom Ventilstößel 3 durchdrungene Regelfeder 6 platzsparend eingesetzt ist.

Hingegen ist die Einstellfeder 7 in beiden Ausführungsbeispielen jeweils entgegengesetzt wirkend zur Regelfeder 6 zwischen dem Magnetanker 4 und einer hülsenförmigen, das Ventilgehäuse 1 verschließenden Ventilkappe 5 angeordnet, wobei auch der Magnetanker 4 eine Tasche 12 aufweist, in die sich die Einstellfeder 7 als auch der Ventilstößel 3 erstrecken. Hierdurch lässt sich sowohl die Regel- als auch Einstellfeder 6, 7 vorteilhaft im Ventilgehäuse 1 integrieren und überdies entlang dem Ventilstößel 3 präzise führen.

Zur Justierung der Vorspannkraft der Einstellfeder 7 ist die Position der Ventilkappe 5 gegenüber dem Magnetpolabschnitt 8 in Axialrichtung veränderbar, wozu die Ventilkappe 5 gegenüber dem Magnetpolabschnitt 8 bzw. gegenüber einer Zwischenhülse 11 eine Übergangspassung aufweist, sodass zur Kraftjustierung der Einstellfeder 7 die Ventilkappe 5 entweder gemäß Fig. 1 vorteilhaft axial verschiebbar entlang dem Magnetpolabschnitt 8 oder aber gemäß Fig. 2 axial verschiebbar entlang der mit dem Magnetpolabschnitt 8 verschweißten Zwischenhülse 11 geführt ist. In den beiden Ausführungsbeispielen erfolgt jeweils eine Endfixierung der Ventilkappe 5 mittels einer Schweißverbindung 9 mit dem Magnetpolabschnitt 8 oder mit der Zwischenhülse 11.

Durch die Einstellbarkeit der Position der Ventilkappe 5 gegenüber dem Magnetpolabschnitt 8 sind Toleranzen der Regelfeder 6 als auch Toleranzen der durch den Elektromagneten erzeugten Magnetkraft infolge der Kraftwirkung der Einstellfeder 7 über den Magnetanker 4 auf die Regelfeder 6 ausgeglichen, wenn als Führungsgröße für die Einstellung eine im Prozess gemessene elektromagnetische Eigenschaft genutzt wird.

In der elektromagnetisch nicht erregten, vom Ventilsitz 2 abgehobenen Grundstellung des Ventilstößels 3 herrscht ein Kräftegleichgewicht zwischen der Regel- und Einstellfeder 6, 7, wodurch der Magnetanker 4 jeweils in einer definierten Position zur Ventilkappe 5 und dem Magnetpolabschnitt 8 verharrt.

Der Einbauraum der Einstellfeder 7 ergibt sich im Wesentlichen aus dem durch die Tasche 12 und einem Axialluftspalt gebildeten Freiraum zwischen dem Magnetanker 4 und der Ventilkappe 5. Dieser Freiraum wird vor dem Verschweißen der Ventilkappe 5 durch das Weiterschieben der Ventilkappe 5 in Richtung des Ventilsitzes 2 dazu benutzt, die Kraft der Einstellfeder 7 auf einen Wert anzuheben, der einer gewünschten und im Prozess kontinuierlich gemessenen Funktionsgröße entspricht. Funktional wirksam ist die Summenkraft aus beiden Druckfedern, wodurch sowohl Toleranzen der Regelfeder 6 als auch Toleranzen der Magnetkraft durch Addition einer größeren oder kleineren Kraft der Einstellfeder 7 ausgeglichen werden können.

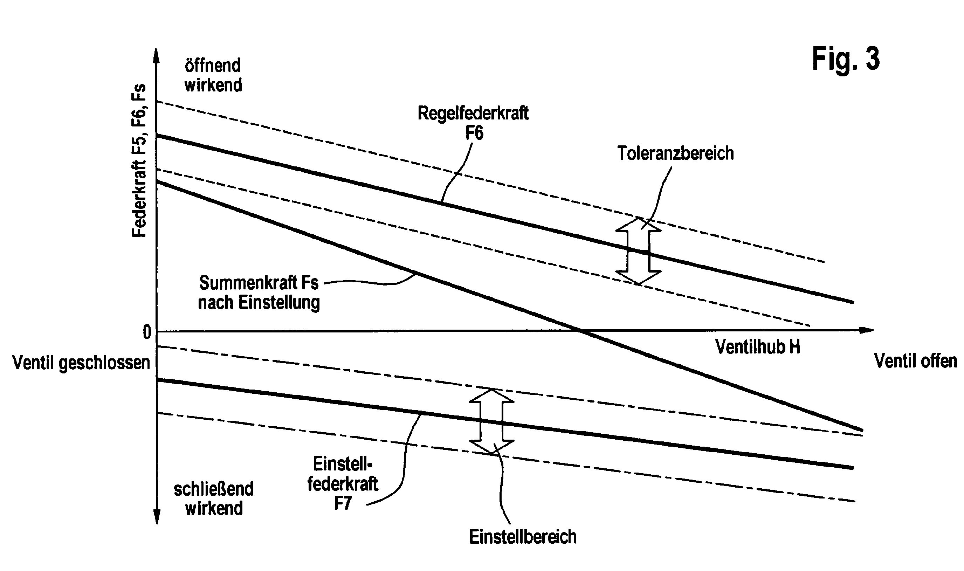

Das Diagramm nach Figur 3 verdeutlicht hierzu für die beiden vorgestellten Druckregelventile den repräsentativen Kennlinienverlauf der aus den beiden Druckfedern resultierenden, in Richtung der Ordinate aufgetragenen Summenkraft Fs sowie die Federkräfte F6, F7 der Regel- und Einstellfeder 6, 7 in Abhängigkeit des über der Abszisse aufgetragenen Ventilstößelhubs H von der geschlossenen bis zur voll geöffneten Ventilstößelstellung. Aus dem Diagramm folgt, dass die stromlos voll geöffnete Ventilstößelstellung nicht mehr zu einer Kontaktierung des Magnetankers 4 an der Ventilkappe 5 führt, sondern dass sich der Ventilstößel 3 im Kraftgleichgewicht beider Druckfedern bei einer Summenkraft Fs = 0 entfernt von der Stirnwand der Ventilkappe 5 befindet. Damit entfällt die bisher erforderliche präzise Einstellung eines Anschlagmaßes, das bisher zwischen dem Magnetanker 4 und der Ventilkappe 5 eingestellt werden musste.

Zu Beginn des Einstellprozesses ist das Druckregelventil wie in Figur 1 und 2 abgebildet zwar in allen Teilen zusammengesetzt, jedoch ist die Ventilkappe 5 noch nicht mittels der Schweißverbindung 9 fixiert und befindet sich zunächst in einer axial vom Magnetpolabschnitt 8 weiter entfernten Position.

Zur Einstellung wird das geschlossene Ende der Ventilkappe 5 kontinuierlich aus der vom Magnetpolabschnitt 8 zunächst weiter entfernten Position in Richtung des Magnetpolabschnitts 8 verschoben. Dabei wird die Erregerspule 10 entweder mit einem konstanten oder einem zeitlich veränderlichen elektrischen Strom beaufschlagt und die elektromagnetische Führungsgröße, die eine Korrelation zur gewünschten Übertragungsfunktion Strom zu Druck aufweist, kontinuierlich oder iterativ identifiziert. Dieser Vorgang wird fortgesetzt, bis die Führungsgröße den angestrebten Zielwert erreicht, dann wird der auf die Ventilkappe 5 wirksame Vorschub beendet und die Ventilkappe 5 anschließend in dieser Einstellposition durch Verschweißen mit dem Ventilgehäuse 1 bzw. der Zwischenhülse 11 fixiert.

Als Führungsgrößen zur Positionierung der Ventilkappe 5 kommen neben anderen als besonders vorteilhaft in Frage:
- Messung des Abfallstroms des Druckregelventils durch Auswertung des Stromverlaufs bei zyklisch wiederkehrender Ventilschaltung, sodass die Position der Ventilkappe 5 gegenüber dem Magnetpolabschnitt 8 in Abhängigkeit des Stromverlaufs in der Erregerspule 10 bei zyklisch wiederkehrender elektromagnetischer Betätigung des Ventilstößels 3 eingestellt wird,
- Messung des Durchflusses durch den offenen Ventilsitz 2 bei vorgegebener elektrischer Bestromung der Erregerspule 10,
- Messung der Bewegung des Ventilstößels 3 in Richtung der Ventilschließstellung infolge der Bestromung der Erregerspule 10 nach einem definiertem Strommuster,
- Messung der vom Magnetantrieb auf den Ventilstößel 3 wirkenden Kraft.

Durch Identifikation der Führungsgröße unter pneumatischem Prüfdruck sind zusätzlich auch Abweichungen aus der Größe des wirksamen Dichtdurchmessers zwischen dem Ventilstößel 3 und dem Ventilsitz 2 korrigierbar.

Als weitere Vorteile des erfindungsgemäßen Druckregelventils sind zu erwähnen:
1. Die Addition der Federraten beider Druckfedern (Regel- und Einstellfeder 6, 7) ermöglicht Auslegungen mit Federraten, die höher sind als es mit einer Druckfeder allein wirtschaftlich herstellbar wäre.
2. Durch Anheben des Kraftniveaus der Regelfeder 6 wird eine Fertigung dieser in engen Toleranzen vereinfacht, Toleranzen der Regelfeder 6 können ggf. großzügig bemessen werden, dadurch lassen sich die Kosten in der Druckfederprüfung und - sortierung senken.
3. Schaltgeräusche des Magnetankers 4 werden infolge des Abstands zur Ventilkappe 5 vermieden.
4. Bei der Verwendung einer magnetisierbaren Ventilkappe 5 kann die Einstellfeder 7 so gestaltet werden, dass ein magnetisches Kleben zwischen Magnetanker 4 und der Ventilkappe 5 verhindert wird, sodass eine sog. Antiklebscheibe eingespart werden kann.

Das Einstellprinzip ist universell anwendbar, d.h. auch für stromlos geschlossene Druckregelventile geeignet. Abschließend zu den bisherigen Erläuterungen bezüglich der in den Fig. 1, 2 abgebildeten Druckregelventile werden nachfolgend noch besonders erwähnenswerte baulichen Unterschiede bezüglich dem Druckregelventil nach Fig. 2 kurz herausgestellt.

Das Druckregelventil nach Figur 2 zeigt nämlich abweichend von Fig. 1, dass sich die Regelfeder 6 nicht zwingend erforderlich unmittelbar in der Tasche 12 des Magnetpolabschnitts 8 abstützen muss, sondern alternativ an einem in das Ventilgehäuse 1 eingepressten hülseförmigen Anschlag 13 anliegen kann, der mit seinem aus dem Magnetpolabschnitt 8 hervorstehenden Bereich vorteilhaft eine Innenzentrierung des Magnetankers 4 ermöglicht. Überdies ist die Ventilkappe 5 zur Verringerung des magnetischen Widerstands vorteilhaft aus einem den Magnetfluss leitenden Werkstoff hergestellt, während die mit dem Magnetpolteil verschweißte Zwischenhülse 11 nicht magnetisch ausgeführt ist.

### Bezugszeichenliste

- 1: Ventilgehäuse
- 2: Ventilsitz
- 3: Ventilstößel
- 4: Magnetanker
- 5: Ventilkappe
- 6: Regelfeder
- 7: Einstellfeder
- 8: Magnetpolabschnitt
- 9: Schweißverbindung
- 10: Erregerspule
- 11: Zwischenhülse
- 12: Tasche
- 13: Anschlag

## Patentansprüche

1. Druckregelventil, mit einer in einem Ventilgehäuse (1) fixierten ersten Druckfeder zur Positionierung eines mit einem Magnetanker (4) verbundenen Ventilstößels (3) in der elektromagnetisch nicht erregten, von einem Ventilsitz (2) abgehobenen Stellung, um eine analog regelbare Verbindung zwischen wenigstens zwei in das Ventilgehäuse (1) einmündenden Druckmittelkanälen herzustellen, sowie mit einer koaxial zur ersten Druckfeder im Ventilgehäuse (1) angeordneten weiteren Druckfeder, wobei die erste Druckfeder als eine Regelfeder (6) und die weitere Druckfeder als eine entgegengesetzt zur Regelfeder (6) wirkende, variabel justierbare Einstellfeder (7) ausgebildet ist, wobei die Regelfeder (6), welche zwischen dem Magnetanker (4) und einem Magnetpolabschnitt (8) des Ventilgehäuses (1) angeordnet ist und die Einstellfeder (7), welche zwischen dem Magnetanker (4) und einer hülsenförmigen Ventilkappe (5) des Ventilgehäuses (1) angeordnet ist, so ausgebildet sind, dass durch die Abstimmung von Summenkraft (Fs) und Federraten beider Druckfedern mit dem Kraft-/Hubverlauf eines Elektromagneten ein durch Stromvariation in einer Erregerspule (10) hub- und kraftspezifischer Federantrieb gebildet ist, und wobei zur Kraftjustierung der Einstellfeder (7) in Axialrichtung die Position der Ventilkappe (5) gegenüber dem Magnetpolabschnitt (8) veränderbar ist, **dadurch gekennzeichnet, dass** die Ventilkappe (5) gegenüber dem Magnetpolabschnitt (8) eine Übergangspassung aufweist, sodass die Ventilkappe (5) zur Kraftjustierung der Einstellfeder (7) axial verschiebbar und mittels einer Schweißverbindung (9) fixierbar ausgeführt ist.

2. Druckregelventil nach Anspruch 1, **dadurch gekennzeichnet, dass** der Magnetpolabschnitt (8) eine Tasche (12) aufweist, in der die koaxial vom Ventilstößel (3) durchdrungene Regelfeder (6) eingesetzt ist.

3. Druckregelventil nach Anspruch 1, **dadurch gekennzeichnet, dass** der Magnetanker (4) eine Tasche (12) aufweist, in die sich die Einstellfeder (7) und der Ventilstößel (3) erstrecken.

4. Druckregelventil nach Anspruch 1, **dadurch gekennzeichnet, dass** die Regel- und Einstellfeder (6, 7) entlang dem Ventilstößel (3) geführt sind.

5. Druckregelventil nach Anspruch 1, **dadurch gekennzeichnet, dass** durch die Veränderung der Position der Ventilkappe (5) gegenüber dem Magnetpolabschnitt (8) Bauteiltoleranzen der Regelfeder (6) und Toleranzen der durch den Elektromagneten erzeugten Magnetkraft infolge der Kraftjustierung der Einstellfeder (7) ausgeglichen sind.

6. Druckregelventil nach Anspruch 1, **dadurch gekennzeichnet, dass** in der elektromagnetisch nicht erregten, vom Ventilsitz (2) abgehobenen Grundstellung des Ventilstößels (3) ein Kräftegleichgewicht zwischen der Regelund Einstellfeder (6, 7) herrscht, wodurch der Magnetanker (4) jeweils in einer definierten Position zur Ventilkappe (5) und dem Magnetpolabschnitt (8) verharrt.

7. Druckregelventil nach Anspruch 1, **dadurch gekennzeichnet, dass** die Position der Ventilkappe (5) gegenüber dem Magnetpolabschnitt (8) in Abhängigkeit des Stromverlaufs in der Erregerspule (10) bei zyklisch wiederkehrender elektromagnetischer Betätigung des Ventilstößels (3) eingestellt ist.

8. Druckregelventil nach Anspruch 1, **dadurch gekennzeichnet, dass** die Position der Ventilkappe (5) gegenüber dem Magnetpolabschnitt (8) in Abhängigkeit des Durchflusses durch den Ventilsitz (2) infolge definierter elektrischer Bestromung der Erregerspule (10) eingestellt ist.

9. Druckregelventil nach Anspruch 1, **dadurch gekennzeichnet, dass** die Position der Ventilkappe (5) gegenüber dem Magnetpolabschnitt (8) in Abhängigkeit der Betätigung des Ventilstößels (3) in Richtung der Ventilschließstellung infolge der Bestromung der Erregerspule (10) nach einem definiertem Strommuster eingestellt ist.

10. Druckregelventil nach Anspruch 1, **dadurch gekennzeichnet, dass** die Position der Ventilkappe (5) gegenüber dem Magnetpolabschnitt (8) in Abhängigkeit der vom Magnetantrieb auf den Ventilstößel (3) übertragenen Kraft bei Bestromung der Erregerspule (10) nach einem definierten Strommuster eingestellt ist.

## Claims

1. Pressure regulating valve, with a first compression spring fixed in a valve housing (1) for positioning a valve plunger (3) connected to a magnetic armature (4) in the electromagnetically non-excited position raised from a valve seat (2), in order to establish a communication, controllable by analog means, between at least two pressure medium channels opening into the valve housing (1) , and with a further compression spring arranged in the valve housing (1) coaxially with the first compression spring, the first compression spring being in the form of a control spring (6) and the further compression spring being in the form of a variably adjustable adjusting spring (7) acting oppositely to the control spring (6), the control spring (6), which is arranged between the magnetic armature (4) and a magnetic pole section (8) of the valve housing (1), and the adjusting spring (7), which is arranged between the magnetic armature (4) and a sleeve-shaped valve cap (5) of the valve housing (1), being configured in such a manner that, through the coordination of the total force (Fs) and the spring rates of the two compression springs with the force/distance curve of an electromagnet, a stroke- and force-specific spring drive is formed through variation of the current in an exciter coil (10), and, in order to adjust the force of the adjusting spring (7) in an axial direction, the position of the valve cap (5) being able to be changed in relation to the magnetic pole section (8), **characterized in that** the valve cap (5) has a transition fit with respect to the magnetic pole section (8), so that, in order to adjust the force of the adjusting spring (7), the valve cap (5) is configured to be displaceable axially and to be fixable by means of a welded connection (9).

2. Pressure regulating valve according to Claim 1, **characterized in that** the magnetic pole section (8) has a receptacle (12) in which the control spring (6), through which the valve plunger (3) passes coaxially, is inserted.

3. Pressure regulating valve according to Claim 1, **characterized in that** the magnetic armature (4) has a receptacle (12) into which the adjusting spring (7) and the valve plunger (3) extend.

4. Pressure regulating valve according to Claim 1, **characterized in that** the control spring (6) and the adjusting spring (7) are guided along the valve plunger (3).

5. Pressure regulating valve according to Claim 1, **characterized in that**, by changing the position of the valve cap (5) with respect to the magnetic pole section (8), component tolerances of the control spring (6) and tolerances of the magnetic force generated by the electromagnet can be compensated as a result of the adjustment of the force of the adjusting spring (7).

6. Pressure regulating valve according to Claim 1, **characterized in that**, in the electromagnetically non-excited normal position of the valve plunger (3) raised from the valve seat (2), an equilibrium of forces prevails between the control spring and the adjusting spring (6, 7), whereby the magnetic armature (4) remains at all times in a defined position with respect to the valve cap (5) and the magnetic pole section (8).

7. Pressure regulating valve according to Claim 1, **characterized in that** the position of the valve cap (5) with respect to the magnetic pole section (8) is set as a function of the current behavior in the exciter coil (10) during cyclically recurrent electromagnetic activation of the valve plunger (3).

8. Pressure regulating valve according to Claim 1, **characterized in that** the position of the valve cap (5) with respect to the magnetic pole section (8) is set as a function of the flow through the valve seat (2) as a result of defined electrical energization of the exciter coil (10).

9. Pressure regulating valve according to Claim 1, **characterized in that** the position of the valve cap (5) with respect to the magnetic pole section (8) is set as a function of the activation of the valve plunger (3) in the direction of the valve closed position as a result of energization of the exciter coil (10) according to a defined current pattern.

10. Pressure regulating valve according to Claim 1, **characterized in that** the position of the valve cap (5) with respect to the magnetic pole section (8) is set as a function of the force transmitted by the magnetic drive to the valve plunger (3) upon energization of the exciter coil (10) according to a defined current pattern.

## Revendications

1. Soupape de régulation de la pression, comprenant un premier ressort de compression fixé dans un boîtier de soupape (1), pour le positionnement d'un poussoir de soupape (3) connecté à un induit magnétique (4) dans la position non excitée électromagnétiquement, soulevée d'un siège de soupape (2), afin d'établir une connexion pouvant être régulée de manière analogique entre au moins deux canaux de fluide sous pression débouchant dans le boîtier de soupape (1), et comprenant aussi un ressort de compression supplémentaire disposé coaxialement par rapport au premier ressort de compression dans le boîtier de soupape (1), le premier ressort de compression étant réalisé sous forme de ressort de réglage (6) et le ressort de compression supplémentaire étant réalisé sous forme de ressort d'ajustement (7) pouvant être ajusté de manière variable et agissant dans le sens opposé au ressort de réglage (6), le ressort de réglage (6), qui est disposé entre l'induit magnétique (4) et une portion de pôle magnétique (8) du boîtier de soupape (1), et le ressort d'ajustement (7), qui est disposé entre l'induit magnétique (4) et une coiffe de soupape en forme de douille (5) du boîtier de soupape (1), étant réalisés de telle sorte que par adaptation de la force combinée (Fs) et des constantes de ressort des deux ressorts de compression à l'allure de la force/course d'un électroaimant, un entraînement de ressort spécifique à la course et à la force étant formé par variation du courant dans une bobine excitatrice (10) , et pour l'ajustement de la force du ressort d'ajustement (7) dans la direction axiale, la position de la coiffe de soupape (5) par rapport à la portion de pôle magnétique (8) pouvant être modifiée, **caractérisée en ce que** la coiffe de soupape (5) présente, par rapport à la portion de pôle magnétique (8), une adaptation de transition, de telle sorte que la coiffe de soupape (5), pour l'ajustement de la force du ressort d'ajustement (7), soit réalisée de manière à pouvoir être déplacée axialement et à pouvoir être fixée au moyen d'une connexion soudée (9).

2. Soupape de régulation de la pression selon la revendication 1, **caractérisée en ce que** la portion de pôle magnétique (8) présente une cavité (12) dans laquelle est inséré le ressort de réglage (6) traversé coaxialement par le poussoir de soupape (3).

3. Soupape de régulation de la pression selon la revendication 1, **caractérisée en ce que** l'induit magnétique (4) présente une cavité (12) dans laquelle s'étendent le ressort d'ajustement (7) et le poussoir de soupape (3).

4. Soupape de régulation de la pression selon la revendication 1, **caractérisée en ce que** les ressorts de réglage et d'ajustement (6, 7) sont guidés le long du poussoir de soupape (3).

5. Soupape de régulation de la pression selon la revendication 1, **caractérisée en ce que** par la modification de la position de la coiffe de soupape (5) par rapport à la portion de pôle magnétique (8), les tolérances de composant du ressort de réglage (6) et les tolérances de la force magnétique générée par les électroaimants du fait de l'ajustement de la force du ressort d'ajustement (7) sont compensées.

6. Soupape de régulation de la pression selon la revendication 1, **caractérisée en ce que** dans la position de base non excitée électromagnétiquement, soulevée du siège de soupape (2), du poussoir de soupape (3) règne un équilibre de forces entre le ressort de réglage et le ressort d'ajustement (6, 7), de sorte que l'induit magnétique (4) demeure à chaque fois dans une position définie par rapport à la coiffe de soupape (5) et à la portion de pôle magnétique (8).

7. Soupape de régulation de la pression selon la revendication 1, **caractérisée en ce que** la position de la coiffe de soupape (5) par rapport à la portion de pôle magnétique (8) est ajustée en fonction de l'allure du courant dans la bobine excitatrice (10) dans le cas d'un actionnement du poussoir de soupape (3) électromagnétique se répétant cycliquement.

8. Soupape de régulation de la pression selon la revendication 1, **caractérisée en ce que** la position de la coiffe de soupape (5) par rapport à la portion de pôle magnétique (8) est ajustée en fonction du flux à travers le siège de soupape (2) du fait du passage d'un courant électrique défini à travers la bobine excitatrice (10).

9. Soupape de régulation de la pression selon la revendication 1, **caractérisée en ce que** la position de la coiffe de soupape (5) par rapport à la portion de pôle magnétique (8) est ajustée en fonction de l'actionnement du poussoir de soupape (3) dans la direction de la position de fermeture de la soupape suite au passage d'un courant électrique à travers la bobine excitatrice (10) suivant un modèle de courant défini.

10. Soupape de régulation de la pression selon la revendication 1, **caractérisée en ce que** la position de la coiffe de soupape (5) par rapport à la portion de pôle magnétique (8) est ajustée en fonction de la force transmise par l'entraînement magnétique au poussoir de soupape (3) lors du passage d'un courant électrique à travers la bobine excitatrice (10) suivant un modèle de courant défini.
